# EUROPÄISCHE PATENTSCHRIFT

(11) **EP 1 163 280 B1**
(45) Veröffentlichungstag und Bekanntmachung des Hinweises auf die Patenterteilung: **06.11.2002**
(21) Anmeldenummer: 00916903.8
(22) Anmeldetag: 06.03.2000
(51) Int. Cl.: C08G 59/62, C08G 59/68

(54) **LAGERSTABILE EPOXIDHARZZUSAMMENSETZUNGEN**
EPOXY RESIN COMPOSITIONS HAVING A LONG SHELF LIFE
COMPOSITIONS DE RESINES EPOXY STABLES AU STOCKAGE

(30) Priorität: 17.03.1999 CH 49899
(43) Veröffentlichungstag der Anmeldung: 19.12.2001
(73) Patentinhaber: Vantico AG, 4057 Basel (CH)
(72) Erfinder: TANG, Qian, CH-4104 Oberwil (CH); REITMAJER, Gunnar, D-79111 Freiburg (DE); ROTH, Martin, CH-4434 Hölstein (CH); SPITZER, Martin, D-79423 Heitersheim (DE); WILLIS, Philip, David, CH-4322 Mumpf (CH)
(74) Vertreter: Dannappel, Hans-Jochen, Dr.
(86) Internationale Anmeldenummer: EP0001956
(87) Internationale Veröffentlichungsnummer: WO00055234

(56) Entgegenhaltungen:
- EP-A- 0 105 488
- EP-A- 0 114 478
- EP-A- 0 249 200
- EP-A- 0 633 286
- EP-A- 0 816 393

## Beschreibung

Die vorliegende Erfindung betrifft Zusammensetzungen enthaltend ein Epoxidharz und ein Polyol als Härter für das Epoxidharz und ein Mikrogel-Amin-Salz bzw. Mikrogel-lmidazol-Salz als Beschleuniger, sowie vernetzte Produkte erhältlich durch Härtung dieser Zusammensetzungen.

Stickstoffhaltige Basen sind dem Fachmann als Härter oder Härtungsbeschleuniger für Epoxidharze wohlbekannt. Solche Systeme weisen allerdings nur eine beschränkte Lagerstabilität auf, da diese Basen bereits bei relativ niedriger Temperatur, teilweise bereits bei Raumtemperatur, mit Epoxiden reagieren, was sich in einem Viskositätsanstieg der Epoxidharzformulierung äussert und bei längerer Lagerdauer zur Gelierung der Mischung führt. Mit zunehmender Reaktivität der stickstoffhaltigen Base wird die Lagerstabilität der Epoxidharzmischung vermindert und die Gebrauchsdauer (Topfzeit) verkürzt. Aus diesem Grund werden solche Systeme als Zwei-Komponenten-Systeme formuliert, d.h. Epoxidharz und stickstoffhaltige Base werden getrennt gelagert und erst kurz vor der Verarbeitung gemischt.
Es hat nicht an Versuchen gefehlt, die Lagerstabilität solcher Systeme durch Entwicklung von entsprechender Härtungssystemen zu verbessern. Die gestellte Aufgabe gewinnt an Komplexität, da zugleich mit einer hohen Lagerstabilität und Gebrauchsdauer weder die Reaktivität bei der gewünschten Härtungstemperatur reduziert noch die Eigenschaften der ausgehärteten Materialien verschlechtert werden soll.

In der EP-A-304 503 werden master batches aus enkapsulierten Materialien und Epoxiden als latente Härter für Epoxidharze beschrieben, wobei das Core-Material ein pulverförmiges tertiäres Amin ist, das von einer Schale aus dem Reaktionsprodukt desselben Amins mit einem Epoxidharz umgeben ist.

Ein ähnliches Härtungssystem, jedoch mit einem Core-Material aus einem Amin und einem Anhydrid, wird in der JP-A-Hei 02-191624 offenbart.

Solche latenten Härter bzw. Beschleuniger auf Basis von enkapsulierten Partikeln sind zwar zur Herstellung von lagerstabilen Ein-Komponenten-Systemen geeignet, weisen jedoch den Nachteil einer ungenügenden Stabilität gegenüber mechanischen Einwirkungen, wie z.B. Scherkräften und Druckbelastungen, auf.

BCI₃-Komplexe besitzen auch eine gute Latenz, jedoch tritt bei Temperaturen ab 160 °C eine Rauchbildung auf, so dass sich ihre Verwendung in Giessharzen auf Epoxidharzbasis verbietet, da die Formtemperaturen bei oder oberhalb dieser Temperatur liegen.

In der EP-A 0 816 393 werden latente Epoxid-Härtungssysteme (auf Basis von Anhydridhärtern in Kombination mit Salzen von Mikrogelen enthaltend COOH-Gruppen und Stickstoff-Basen) mit verbesserter Topfzeit beschrieben, die eine hohe Stabilität gegenüber mechanischer Beanspruchung in Form von Scherkräften besitzen und zusätzlich zu gehärteten Formkörpern mit hoher Glastemperatur und hoher thermischer Beständigkeit führen. Die Latenz dieser Systeme ist jedoch noch verbesserungsfähig, insbesondere bei erhöhten Temperaturen.

In der EP-A 0 633 286 werden härtbare Epoxid-Härtungssysteme zur Herstellung von Formstoffen mit hochglänzenden Oberflächen beschrieben, enthaltend ein Epoxidharz, ein Härtungsmittel sowie als Füllstoffe Wollastonit und ein Quarz/Kaolinit-Gemisch. Die Latenz dieser Systeme ist jedoch ebenfalls noch verbesserungsfähig.

Aufgabe der vorliegenden Erfindung war es, Epoxid-Härtungssysteme mit guter Lagerstabilität, guter Reaktivität unter Härtungsbedingungen, mit guten und gleichzeitig vielfältigen Verarbeitungsmöglichkeiten auch bei erhöhten Temperaturen und schliesslich mit guten Eigenschaften der ausgehärteten Materialien bereitzustellen.

Es wurde nun gefunden, dass Zusammensetzungen enthaltend ein Epoxidharz und ein Polyol als Härter für das Epoxidharz und ein festes Mikrogel-Amin-Salz bzw. festes Mikrogel-Imidazol-Salz als Beschleuniger das gewünschte Eigenschaftsprofil aufweisen.

Gegenstand vorliegender Erfindung ist somit eine Zusammensetzung enthaltend
(a) ein Epoxidharz mit durchschnittlich mehr als einer 1,2-Epoxidgruppe pro Molekül,
(b) ein Polyol als Epoxidharzhärtungsmittel und
(c) ein festes Reaktionsprodukt aus einem Carbonsäuregruppen enthaltendem Mikrogel und einer stickstoffhaltigen Base (Mikrogel-Amin-Addukt) als Beschleuniger.

Zur Herstellung der erfindungsgemässen Zusammensetzungen eignen sich als Komponente (a) die in der Epoxidharztechnik üblichen Epoxidharze. Beispiele für Epoxidharze sind:

l) Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
Weiterhin können aromatische Polycarbonsäuren Verwendung finden, wie beispielsweise Phthalsäure, Isophthalsäure oder Terephthalsäure.

II) Polyglycidyl-oder Poly-(β-methylglycidyl)-ether, erhältlich durch Umsetzung einer Verbindung mit mindestens zwei freien alkoholischen Hydroxygruppen und/oder phenolischen Hydroxygruppen mit Epichlorhydrin oder β-Methylepichlorhydrin unter alkalischen Bedingungen oder in Anwesenheit eines sauren Katalysators mit anschliessender Alkalibehandlung.

Die Glycidylether dieses Typs leiten sich beispielsweise von acyclischen Alkoholen ab, z.B. von Ethylenglykol, Diethylenglykol oder höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.
Weitere Glycidylether dieses Typs leiten sich ab von cycloaliphatischen Alkoholen, wie 1,4-Cyclohexandimethanol, Bis-(4-hydroxycyclohexyl)-methan oder 2,2-Bis-(4-hydroxycyclohexyl)-propan, oder von Alkoholen, die aromatische Gruppen und/oder weitere funktionelle Gruppen enthalten, wie N,N-Bis-(2-hydroxyethyl)-anilin oder p,p'-Bis-(2-hydroxyethylamino)-diphenylmethan.

Die Glycidylether können auch auf einkernigen Phenolen, wie beispielsweise Resorcin oder Hydrochinon, oder auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan oder 2,2-Bis-(3,5-dibrom-4-hydroxyphenyl)-propan, basieren.
Weitere geeignete Hydroxyverbindungen zur Herstellung von Glycidylethern sind Novolake, erhältlich durch Kondensation von Aldehyden, wie Formaldehyd, Acetaldehyd, Chloral oder Furfuraldehyd, mit Phenolen oder Bisphenolen, die unsubstituiert oder mit Chloratomen oder C₁-C₉-Alkylgruppen substituiert sind, wie beispielsweise Phenol, 4-Chlorphenol, 2-Methylphenol oder 4-tert.-Butylphenol.

III) Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis-(4-aminophenyl)-methan, m-Xylylendiamin oder Bis-(4-methylaminophenyl)-methan.

Zu den Poly-(N-glycidyl)-verbindungen zählen aber auch Triglycidylisocyanurat, N,N'-Diglycidylderivate von Cycloalkylenhamstoffen, wie Ethylenhamstoff oder 1,3-Propylenharnstoff, und Diglycidylderivate von Hydantoinen, wie von 5,5-Dimethylhydantoin.

IV) Poly-(S-glycidyl)-verbindungen, beispielsweise Di-S-glycidylderivate, die sich von Dithiolen, wie beispielsweise Ethan-1,2-dithiol oder Bis-(4-mercaptomethylphenyl)-ether, ableiten.

V) Cycloaliphatische Epoxidharze, wie beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)-propan.

Neben flüssigen kommen auch feste Polyglycidylether und -ester Verbindungen mit Schmelzpunkten oberhalb Raumtemperatur bis etwa 250°C in Betracht. Bevorzugt liegen die Schmelzpunkte der festen Verbindungen im Bereich von 50 bis 150°C. Solche festen Verbindungen sind bekannt und zum Teil im Handel erhältlich. Als feste Polyglycidylether und -ester können auch die durch Vorverlängerung von flüssigen Polyglycidylethern und - estem erhaltenen Advancement-Produkte verwendet werden.

Bevorzugt verwendet man zur Herstellung der erfindungsmässen Epoxidharzzusammensetzungen ein aromatisches Epoxidharz, also eine Epoxidverbindung, die im Molekül einen oder mehrere aromatische Ringe aufweist.
Insbesondere verwendet man zur Herstellung der erfindungsmässen Epoxidharzzusammensetzungen einen, ggf. vorverlängerten, Bisphenoldiglycidylether oder ein Epoxynovolakharz, besonders bevorzugt ein Epoxyphenol- oder ein Epoxykresolnovolakharz. Es können auch Gemische von Epoxidharzen verwendet werden.

Als Epoxidharzhärtungsmittel (b) werden für die erfindungsgemässen Epoxidharzzusammensetzungen aliphatische oder aromatische Polyole eingesetzt.

Als aliphatische Polyole eignen sich beispielsweise Ethylenglykol, Diethylenglykol und höhere Poly-(oxyethylen)-glykole, Propan-1,2-diol oder Poly-(oxypropylen)-glykole, Propan-1,3-diol, Butan-1,4-diol, Poly(oxytetramethylen)-glykole, Pentan-1,5-diol, Hexan-1,6-diol, Hexan-2,4,6-triol, Glycerin, 1,1,1-Trimethylolpropan, Pentaerythrit oder Sorbit.

Als aromatische Polyole eignen sich beispielsweise einkernige Phenole, wie Resorcin, Hydrochinon, N,N-Bis-(2-hydroxyethyl)-anilin, oder mehrkernige Phenole, wie p,p'-Bis-(2-hydroxyethylamino)-diphenylmethan, Bis-(4-hydroxyphenyl)-methan, 4,4'-Dihydroxybiphenyl, Bis-(4-hydroxyphenyl)-sulfon, 1,1,2,2'-Tetrakis-(4-hydroxyphenyl)-ethan, 2,2-Bis-(4-hydroxyphenyl)-propan, 2,2-Bis-(3,5-dibrom-4-hydroxyphenyl)-propan sowie Novolake, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol, oder durch Kondensation mit Bisphenolen, solche der oben genannten Art, eingesetzt werden.

Bevorzugt verwendet man als phenolisches Härtungsmittel (b) einen Kresolnovolak.

Es können auch Härtergemische verwendet werden. Es können weiterhin auch Härtergemische verwendet werden, bei denen andere gebräuchliche Epoxidharzhärter als die oben genannten Haupthärter als Cohärter eingesetzt werden, wie beispielsweise Anhydridhärter.

Das Verhältnis von Härter (b) zu Epoxidharz (a) lässt sich in weiten Grenzen variieren und ist abhängig vom Gehalt an Epoxidgruppen in (a) und Hydroxylgruppen in (b) und den gewünschten Eigenschaften der härtbaren Zusammensetzung und des gehärteten Produktes. Im allgemeinen werden prol Mol Epoxidgruppen etwa 0,7 bis 1,3 Mol OH-Gruppen eingesetzt, bevorzugt 0,9 bis 1,1 Mol. Es ist aber auch möglich, geringere Mengen an OH-Gruppen zu verwenden, gegebenenfalls unter Zusatz von anderen gebräuchlichen Epoxidharzhärtem als den oben genannten Polyolen.

Als Komponente (c) der vorliegenden Erfindung dient ein festes Reaktionsprodukt aus einem Carbonsäuregruppen enthaltenden Mikrogel und einer stickstoffhaltigen Base (Mikrogel-Amin-Addukt). Näheres zur Herstellung eines solchen Reaktionsproduktes, mögliche Zusammensetzungen, Bevorzugungen usw. sind Gegenstand der eingangs erwähnten EP-A 0 816 393 und sind nachfolgend, soweit relevant für den vorliegenden Erfindungsgegenstand, dieser Druckschrift entnommen:

Unter Mikrogelen versteht man im allgemeinen Makromoleküle, deren Kettensegmente im Bereich der einzelnen Knäuel über kovalente Brücken vernetzt sind.
Mikrogele können nach verschiedenen bekannten Polymerisationsmethoden hergestellt werden. Vorteilhaft ist die Emulsionspolymerisation von Verbindungen mit polymerisierbaren C-C-Doppelbindungen in Gegenwart von sogenannten mehrfunktionellen Vernetzern, beispielsweise nach der Saat-Methode (seeding technique). Dabei liegen die Mikrogelpartikel nach der Polymerisation in Form einer wässrigen Emulsion oder Suspension vor. Die weitere Umsetzung mit der stickstoffhaltigen Base kann vorzugsweise mit einer solchen Emulsion/Suspension erfolgen. Es ist aber auch möglich, das Mikrogel zunächst in Form eines festen Pulvers, z.B. mittels Sprühtrocknung oder Gefriertrocknung, zu isolieren, oder die wässrige Emulsion durch Lösungsmittelaustausch in eine organische Phase zu überführen.

Als mehrfunktionelle Vemetzer können im Prinzip alle Verbindungen, die mindestens zwei polymerisierbare C-C-Doppelbindungen enthalten, Anwendung finden.
Dabei entstehen intramolekular vernetzte Copolymere, die im allgemeinen Partikelgrössen im Nanometerbereich (ca. 5-1000 nm) aufweisen.

Ein bevorzugtes Mikrogel zur Herstellung des Reaktionsprodukts ist ein Copolymer aus mindestens einer ungesättigten Carbonsäure und mindestens einem mehrfunktionellen Vernetzer.

Ein besonders bevorzugtes Mikrogel ist ein Copolymer aus mindestens einer ungesättigten Carbonsäure, mindestens einem carbonsäuregruppenfreien Vinylmonomer und mindestens einem mehrfunktionellen Vemetzer.

Zur Herstellung von Carbonsäuregruppen enthaltenden Mikrogelen eignen sich grundsätzlich alle Carbonsäuren, die eine polymerisierbare C-C-Doppelbindung enthalten.

Bevorzugte ungesättigte Carbonsäuren sind Acrylsäure, Methacrylsäure, 2-Carboxyethylacrylat, 2-Carboxyethylmethacrylat, Phthalsäuremono(2-acryloylethyl)ester, Phthalsäuremono(2-methacryloylethyl)ester, Maleinsäure, Maleinsäuremonomethylester, Maleinsäuremonoethylester, Fumarsäure, Fumarsäuremonomethylester, Fumarsäuremonoethylester, Itaconsäure, Zimtsäure, Crotonsäure, 4-Vinylcyclohexancarbonsäure, 4-Vinylphenylessigsäure und p-Vinylbenzoesäure.

Acrylsäure und Methacrylsäure sind insbesondere bevorzugt.

Als mehrfunktionelle Vernetzer eignen sich grundsätzlich alle Verbindungen, die mindestens zwei polymerisierbare C-C-Doppelbindungen enthalten. Ebenfalls geeignet als mehrfunktionelle Vernetzer sind Gemische aus mindestens zwei Vinylmonomeren, wie z.B. Methacrylsäure und Glycidylmethacrylat, die über zusätzliche funktionelle Gruppen während oder nach der Polymerisationsreaktion miteinander reagieren können.

Vorzugsweise wird ein polyfunktioneller Acrylsäureester oder Methacrylsäureester eines aliphatischen, cycloaliphatischen oder aromatischen Polyols, ein Additionsprodukt von Acrylsäure oder Methacrylsäure und einer Polyglycidylverbindung, ein Additionsprodukt von Acrylsäure oder Methacrylsäure und Glycidylacrylat oder -methacrylat, ein Acrylsäurealkenylester oder Methacrylsäurealkenylester, ein Dialkenylcyclohexan oder ein Dialkenylbenzol als mehrfunktioneller Vernetzer verwendet.

Besonders bevorzugte mehrfunktionelle Vernetzer sind Ethylenglykoldiacrylat, Ethylenglykoldimethacrylat, Propylenglykoldiacrylat, Propylenglykoldimethacrylat, 1,4-Butandioldiacrylat, 1,4-Butandioldimethacrylat, Polyethylenglykoldiacrylat, Polyethylenglykoldimethacrylat, Polypropylenglykoldiacrylat, Polypropylenglykoldimethacrylat, 1,1,1-Trimethylolpropantriacrylat, 1,1,1-Trimethylolpropantrimethacrylat, Bisphenol-A-diglycidyletherdiacrylat, Bisphenol-A-diglycidyletherdimethacrylat, Acrylsäureallylester, Methacrylsäureallylester, Divinylcyclohexan und Divinylbenzol.

Das zur Herstellung der Mikrogele verwendete Monomerengemisch kann ein oder mehrere carbonsäuregruppenfreie Vinylmonomere enthalten, wie zum Beispiel Butadien und Butadienderivate, Acrylnitril, Methacrylnitril, Acrylsäureester und -amide, Methacrylsäureester und -amide, Vinylether und -ester, Allylether und -ester, Styrol und Styrolderivate.

Bevorzugte carbonsäuregruppenfreie Vinylmonomere sind Alkylester, Hydroxyalkylester und Glycidylester von ungesättigten Carbonsäuren und Styrolderivate.

Besonders bevorzugte carbonsäuregruppenfreie Vinylmonomere sind Methylacrylat, Methylmethacrylat, Ethylacrylat, Ethylmethacrylat, 2-Hydroxyethylacrylat, 2-Hydroxyethylmethacrylat, Butylacrylat, Butylmethacrylat, 2-Ethylhexylacrylat, 2-Ethylhexylmethacrylat und Styrol.

Das Reaktionsprodukt wird vorzugsweise aus einem Mikrogel hergestellt, welches ein Copolymer aus 2 bis 70 Gew.-% mindestens einer ungesättigten Carbonsäure, 0 bis 96 Gew.-% mindestens eines carbonsäuregruppenfreien Vinylmonomers und 2 bis 70 Gew.-% mindestens eines mehrfunktionellen Vernetzers ist, wobei die Summe der Gewichtsprozentanteile immer 100 beträgt.

Besonders bevorzugte Mikrogele sind Copolymere aus 5 bis 50 Gew.-%, insbesondere 10 bis 40 Gew.-%, mindestens einer ungesättigten Carbonsäure, 0 bis 90 Gew.-%, insbesondere 30 bis 85 Gew.-%, mindestens eines carbonsäuregruppenfreien Vinylmonomers und 5 bis 50 Gew.-%, insbesondere 5 bis 30 Gew.-% mindestens eines mehrfunktionellen Vernetzers.

Die Reaktionsprodukte werden im folgenden vereinfachend als "Mikrogel-Amin-Salze" bezeichnet, wobei der Begriff "Amin" in diesem Zusammenhang ganz allgemein für "stickstoffhaltige Basen" steht und nicht auf die Bedeutung des Begriffs "Amin" im strengeren Sinne beschränkt ist.

Geeignete stickstoffhaltige Basen zur Herstellung der Reaktionsprodukte sind im Prinzip alle basischen Verbindungen, die mindestens ein basisches Stickstoff-Atom enthalten.
Beispiele dafür sind aliphatische, cycloaliphatische und aromatische Amine sowie gesättigte und ungesättigte N-Heterocyclen.

Es können primäre, sekundäre und tertiäre Amine eingesetzt werden; auch die Verwendung von Verbindungen mit mehreren basischen Stickstoffatomen ist möglich. Beispiele dafür sind Imidazole, Polyamine, wie Triethylentetramin oder Isophorondiamin, Polyaminoamide, wie zum Beispiel die Reaktionsprodukte von aliphatische Polyaminen und dimerisierten oder trimerisierten Fettsäuren, aber auch Polyoxyalkylenamine, wie z. B. Jeffamine® (Fa. Texaco).

Vorzugsweise wird ein Amin, ein Polyamin oder ein Imidazol eingesetzt.

Natürlich sind auch Gemische von Aminen und Imidazolen geeignet.

Besonders bevorzugte stickstoffhaltige Basen sind die Amine und Imidazole der Formeln I, II oder III

NR₁R₂R₃ (I),

R₄R₅N-A-NR₆R₇ (II)

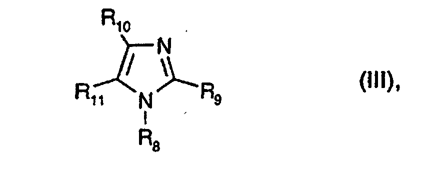

worin R₁ bis R₇ unabhängig voneinander Wasserstoff, C₁-C₁₂-Alkyl, unsubstituiertes oder substituiertes Phenyl, Benzyl, Phenylethyl, Cyclopentyl oder Cyclohexyl bedeuten, oder R₂ und R₃ oder R₄ und R₅ oder R₆ und R₇ zusammen Tetramethylen, Pentamethylen, -(CH₂)₂-O-(CH₂)₂- oder -(CH₂)₂-NH-(CH₂)₂- darstellen,
A für C₁-C₃₀-Alkandiyl steht,
R₈ bis R₁₁ unabhängig voneinander Wasserstoff, C₁-C₁₈-Alkyl, Phenyl oder Benzyl bedeuten oder R₈ und R₉ oder R₈ und R₁₁ oder R₁₀ und R₁₁ zusammen Tetramethylen, Pentamethylen, -(CH₂)₂-O-(CH₂)₂- oder -(CH₂)₂-NH-(CH₂)₂- darstellen.

Beispiele für Amine der Formel l sind Trimethylamin, Triethylamin, Phenyldimethylamin, Diphenylmethylamin, Triphenylamin, Benzylamin, N,N-Dimethylbenzylamin, Pyrrolidin, N-Methylpyrrolidin, N-Methylpiperidin und N-Phenylpiperidin.

Geeignete Diamine der Formel II sind beispielsweise 1,2-Diaminoethan und N,N,N',N'-Tetramethyl-1,2-diaminoethan.

Beispiele für Imidazole der Formel III sind Imidazol, 1-Methylimidazol, 2-Methylimidazol, 2-Phenylimidazol, 2-lsopropylimidazol, 2-Dodecylimidazol, 2-Heptadecylimidazol und 2-Ethyl-4-methylimidazol.

2-Phenylimidazol, 2-lsopropylimidazol, 2-Dodecylimidazol, 2-Heptadecylimidazol und 2-Ethyl-4-methylimidazol sind ganz besonders bevorzugte stickstoffhaltige Basen.

Die Umsetzung der stickstoffhaltigen Base mit dem Carbonsäuregruppen enthaltenden Mikrogel erfolgt vorzugsweise in Lösung. Bevorzugte Lösungsmittel sind Wasser und Mischungen von Wasser mit wassermischbaren Lösungsmitteln, wie z.B. Methanol, Ethanol, Isopropanol oder Aceton. Dabei kann die bei der Herstellung des Mikrogels durch Emulsionspolymerisation anfallende Emulsion oder Suspension direkt eingesetzt werden. Die Reaktionstemperaturen betragen zweckmässig 0 bis 200 °C, vorzugsweise 10 bis 100 °C. Das Mengenverhältnis der Ausgangsprodukte kann dabei in weiten Bereichen variieren.

Zweckmässig werden jedoch solche Mengen von Carbonsäuregruppen enthaltendem Mikrogel und stickstoffhaltiger Base eingesetzt, dass die COOH-Gruppen im Verhältnis zu basischen Stickstoffatomen in äquimolaren Mengen oder im Überschuss vorliegen. Die Anzahl der basischen Stickstoffatome beträgt, bezogen auf die Anzahl der COOH-Gruppen im Mikrogel, vorzugsweise 5 bis 100 mol-%, besonders bevorzugt 30 bis 100 mol-% und insbesondere bevorzugt 60 bis 95 mol-%.
Die Isolierung des Mikrogel-Amin-Salzes als festes Pulver kann mittels Sprühtrocknung oder Lyophilisation erfolgen. Es ist aber auch möglich, die Emulsion/Suspension mit bekannten Methoden (Elektrolytzugabe, Ausfrieren) zu koagulieren und das ausgefallene Produkt durch Filtration als feste Substanz zu isolieren, die gegebenenfalls durch weiteres Pulverisieren in die gewünschte Partikelgrösse überführt werden kann. Ausserdem kann das Produkt gewonnen werden, indem die Emulsion zur Trockne eingedampft wird und der Rückstand mit bekannten Methoden in die gewünschte Form überführt wird.

Für die vorliegende Erfindung werden die Mikrogel-Amin-Salze ausschliesslich in fester Form verwendet. Wie eingangs erwähnt, eignen sich die Mikrogel-Amin-Salze (c) als Härter oder insbesondere als Härtungsbeschleuniger für Epoxidharze (a). Das Mengenverhältnis der Komponenten (a) und (c) kann in den erfindungsgemässen Zusammensetzungen in weiten Bereichen variieren. Das optimale Verhältnis ist u.a. abhängig vom Amintyp und Amingehalt des Mikrogel-Amin-Salzes sowie von der gewünschten Reaktivität der Zusammensetzung und kann vom Fachmann leicht ermittelt werden.

Das Gewichtsverhältnis der Komponenten (a) zu (c) beträgt zweckmässig von 1 zu 2 bis 2000 zu 1, vorzugsweise von 1 zu 1 bis 1000 zu 1, und besonders bevorzugt von 2 zu 1 bis 1000 zu 1, wenn (c) als Beschleuniger verwendet wird:

Die erfindungsgemässen Zusammensetzungen können gegebenenfalls weitere bekannte Beschleuniger, wie zum Beispiel Imidazole oder Benzyldimethylamin, enthalten.

Weiterhin können die härtbaren Mischungen Zähigkeitsvermittler ("Toughener") enthalten, wie zum Beispiel Core/Shell-Polymere oder die dem Fachmann als "Rubber Toughener" bekannten Elastomere oder Elastomere enthaltende Pfropfpolymere.
Geeignete Zähigkeitsvermittler sind beispielsweise in der EP-A-449 776 beschrieben.

Für viele Anwendungen werden Zusammensetzungen bevorzugt, die neben den bereits beschriebenene Komponenten (a), (b) und (c) noch Füllstoff (d) enthalten.

Ein weiterter Gegenstand der vorliegenden Erfindungen sind daher auch härtbare Zusammensetzungen enthaltend
(a) ein Epoxidharz mit durchschnittlich mehr als einer 1,2-Epoxidgruppe pro Molekül,
(b) ein Polyol als Epoxidharzhärtungsmittel,
(c) ein Mikrogel-Amin-Addukt als Beschleuniger und
(d) Füllstoff.

Als Füllstoffe (d) kommen für die härtbaren Mischungen alle bekannten mineralischen und organischen Typen in Frage, wie beispielsweise Metallpulver, Holzmehl, Russ, Glasfasern, Glaspulver, Glaskugeln, Kevlar; Halbmetall- und Metalloxide, wie zum Beispiel SiO₂ (Aerosile, Quarz, Quarzmehl, Quarzgutmehl, Aluminiumoxid, Titandioxid und Zirkoniumoxid; Metallhydroxide, wie Mg(OH)₂, Al(OH)₃ und AIO(OH); Halbmetall- und Metallnitride, wie zum Beispiel Siliziumnitrid, Bornitrid und Aluminiumnitrid; Halbmetall- und Metallcarbide (SiC und Borcarbide); Metallcarbonate (Dolomit, Kreide, CaCO₃); Metallsulfate (Baryt, Gips); Zinksulfid; Gesteinsmehle, wie z.B. von Hydromagnesit und Huntit, und natürliche oder synthetische Mineralien hauptsächlich aus der Silikatreihe, wie zum Beispiel Zeolithe (insbesondere Molekularsiebe), Talkum, Glimmer, Kaolin, Sillitin, Wollastonit, Bentonit und andere.
Zur Verbesserung der mechanischen Eigenschaften und der Oberflächengüte können von o.g. Füllstoffen auch mit Additiven, speziell Haftvermittlern, beschichtete Varianten zum Einsatz kommen. Zur Oberflächenbehandlung finden vorzugsweise Silane und Acrylate Verwendung. Eine besonders bevorzugte Variante ist die Silanisierung mit dem epoxidgruppenhaltigen Silan Silquest® A-187 (gamma-Glycidoxypropyltrimethoxysilan der Fa. Osi Specialities).

Bevorzugte Füllstoffe für die erfindungsgemässen Zusammensetzungen sind Wollastonit und/oder ein Gemisch aus Quarz und Kaolinit.
Wollastonit ist ein natürlich vorkommendes Calciumsilikat der Formel Ca₃[Si₃O₉] von nadelförmiger Gestalt, ebenso wie der künstlich hergestellte Wollastonit. Wollastonit ist im Handel erhältlich, beispielsweise unter der Bezeichnung Nyad® der Firma Nico.
Vorzugsweise wird in den erfindungsgemässen Zusammensetzungen Wollastonit mit einer mittleren Teilchengrösse von kleiner als 50 µm, bevorzugt kleiner als 5 µm, und in Mengen von 1 bis 80 Gew.-%, bevorzugt 25 bis 40 Gew.-%, bezogen auf die Gesamtzusammensetzung bestehend aus den Komponenten (a), (b), (c) und (d), eingesetzt. Quarz/Kaolinit Gemische sind bekannt und können durch einfaches Mischen von gemahlenem Quarz mit Kaolinit hergestellt werden. Kaolinit, ein Hauptbestandteil des Kaolins, ist im Handel als mikrokristallines Aluminiumsilikat erhältlich.
Vorzugsweise werden in den erfindungsgemässen Zusammensetzungen Quarz/Kaolinit-Gemische mit einer mittleren Teilchengrösse kleiner als 50 µm, bevorzugt kleiner als 5 µm, einem Gewichtsverhältnis von Quarz zu Kaolinit von 5 zu 95 bis 95 zu 5, bevorzugt von 20 zu 80 bis 80 zu 20 und in Mengen von 1 bis 80 Gew.-%, bevorzugt 25 bis 40 Gew.-%, bezogen auf die Gesamtzusammensetzung bestehend aus den Komponenten (a), (b), (c) und (d), eingesetzt.

Die Mengen an Füllstoffen lässt sich je nach Anwendung in weiten Bereichen variieren und beträgt 1 bis 80 Gew.-%, bezogen auf die Gesamtmischung der Komponenten (a), (b), (c) und (d).

Neben den oben erwähnten Füllstoffen können die härtbaren Gemische weitere übliche Zusatzstoffe enthalten, wie z.B. Lösemittel, Reaktivverdünner, Antioxidantien, Lichtschutzmittel, Weichmacher, Farbstoffe, Pigmente, Thixotropiemittel, Zähigkeitsverbesserer, Entschäumer, Antistatika, Haftungs-, Trenn-, Hydrophobisierungs-, Gleit- und Entformungshilfsmittel.

Die erfindungsgemässen Zusammensetzungen können nach bekannten Methoden mit Hilfe bekannter Mischaggregate, wie beispielsweise Rührer, Kneter, Walzen oder Trockenmischem, hergestellt werden. Im Falle von festen Epoxidharzen kann die Dispergierung auch in der Schmelze erfolgen. Die Temperatur bei der Dispergierung soll so gewählt werden, dass während des Mischvorgangs keine vorzeitige Härtung eintritt. Die optimalen Härtungsbedingungen sind abhängig vom Mikrogel, von der Art und Menge des der stickstoffhaltigen Base, vom Epoxidharz und von der Dispergierungsform und können vom Fachmann in jedem Fall mit bekannten Methoden bestimmt werden.

Die Komponente (c), die als Feststoff vorliegt, wird mittels bekannter Methoden, wie z.B. durch einfaches Rühren oder durch Rühren unter Zuhilfenahme von Glaskugeln, im Epoxidharz (a) oder in einer Lösung des Epoxidharzes (a) dispergiert. Dabei wird zweckmässig unterhalb der Temperatur gearbeitet, bei der die Reaktion des Mikrogel-Amin-Salzes mit dem Epoxidharz einsetzt. Vorzugsweise wird bei Temperaturen unterhalb von 60 °C gearbeitet.
Die Komponente (c) kann auch im Härter (b) dispergiert werden.
Die Härtung der erfindungsgemässen Epoxidharzzusammensetzungen zu Formkörpern, Beschichtungen oder dergleichen erfolgt in für die Epoxidharztechnik üblicher Weise, wie sie beispielsweise im "Handbook of Epoxy Resins", 1967, von H. Lee und K. Neville beschrieben wird.

Aufgrund der hohen Latenz der erfindungsgemässen Mikrogel-Amin-Salze weisen die härtbaren Zusammensetzungen eine hohe Lagerstabilität und eine lange Gebrauchsdauer auf, sowie eine hohe Beständigkeit gegenüber starken mechanischen Einwirkungen (Scherbelastung, Druckbelastung). Die im Vergleich zu herkömmlichen Beschleunigem verbesserte Lagerstabilität erlaubt z.B. die Herstellung von 1-Komponenten Epoxidharz/Härter-Systemen oder von solchen Epoxidharzsystemen, die eine verbesserte Lagerstabilität ohne Kühlung aufweisen und/oder bei höheren Temperaturen eine Plastifizierung ohne erheblichen Reaktionsfortschritt erlauben. Solche erfindungsgemässen Zusammensetzungen bleiben z.B. bei Plastifizierungsprozessen länger fliessfähig mit nur geringen Auswirkungen auf die Reaktivität bei der Härtungstemperätur.

Die erfindungsgemässen Zusammensetzungen eignen sich prinzipiell in allen Anwendungsgebieten, bei denen Epoxidharze mit Polyolen gehärtet werden, z.B. als Giessharze, Laminierharze, Klebstoffe, Pressmassen, Beschichtungsmassen, Umhüllungssysteme oder als Keramikersatz. Es sind dies beispielsweise:
Die Enkapsulierung und Imprägnierung von elektrischen Bauteilen wie z.B. Spulen, Schalter, Relais, Transformatoren, Durchführungen, Printermagnete, Sensoren, Statoren und Rotoren,
ferner zur Herstellung von diversen mechanischen Bauteilen, wie z.B. Gehäuse, Scheinwerfern, Kollektoren, Pumpen und Ventileteile, Druckgehäuse, Flansche, Schaltstangen und Isolationen.

Gegenstand vorliegender Erfindung sind daher auch die vernetzten Produkte, wie beispielsweise Formstoffe, Beschichtungen oder Verklebungen, erhältlich durch die Härtung einer erfindungsgemässen Zusammensetzung.

### Beispiele:

### 1. Herstellung von Carbonsäuregruppen enthaltenden Mikrogelen

### Beispiel 1.1: Mikrogel aus Methacrylsäure, Methylmethacrylat, Ethylenglykoldimethacrylat und Trimethylolpropantrimethacrylat

Zunächst wird eine Monomermischung aus 17,05 g Methacrylsäure, 42,07 g Methylmethacrylat, 7,51 g Ethylenglykoldimethacrylat und 7,51 g Trimethylolpropantrimethacrylat hergestellt.
In einem Sulfierkolben, der mit Glassankerrührer, Thermometer, Gasanschluss und Dosierungsanschluss ausgerüstet ist, werden 2,25 g Natriumdodecylsulfat und 422,3 g deionisiertes Wasser unter Stickstoff gerührt (ca. 200 U/min) und auf 65°C (Innentemperatur) aufgeheizt. Anschliessend werden 7,4 ml der oben angegebenen Monomermischung und eine Lösung aus 0,033 g Natriumpersulfat in 0,6 ml deionisiertes Wasser zugegeben. Das so erhaltene Gemisch wird auf 65°C aufgeheizt und nach 15 min Rühren bei 65°C wird der Rest der Monomermischung innerhalb von ca. 1 h hinzugegeben. Nach weiteren 75 min Rühren bei 65°C wird eine Lösung aus 0,033 g Natriumpersulfat in 0,6 ml deionisiertes Wasser zugegeben. Das Reaktionsgemisch wird weitere 5,5 h bei 65°C gerührt. Nach Abkühlung auf Raumtemperatur wird der Inhalt des Reaktionsgefässes durch eine Papierfilter filtriert. Die so erhaltene Emulsion hat einen Festkörpergehalt von 14,3% und einen Säuregehalt von 0,408 mol/kg und kann direkt mit einem Amin oder Imidazol zu einem Mikrogel-Amin-Salz umgesetzt werden.

### 2. Herstellung von Mikrogel-Amin-Salzen

### Beispiel 2.1:

Zu 400 g der nach Beispiel 1.1 hergestellten wässrigen Emulsion wird unter Rühren eine Lösung von 17,08 g 2-Ethyl-4-methylimidazol in 44 g Isopropanol zugegeben. Die so erhaltene Emulsion eines Mikrogel-lmidazol-Salzes wird sprühgetrocknet (Inlet-Temperatur: 132°C, Outlet-Temperatur 85°C). Das Mikrogel-lmidazol-Pulver wird bei 70°C unter Vakuum (20 mbar) währen 8 h weiter getrocknet und weist einen Amingehalt von 1,96 mol/kg und einen Säuregehalt von 2,01 mol/kg auf.

### 3. Herstellung einer erfindungsgemässen Zusammensetzung und Vergleichsbeispile

### Beispiel 3.1 (Erfindungsbeispiel)

334,40 g eines festen Epoxidkresolnovolakharzes mit einem Epoxidgehalt von 4,3 bis 4,9 mol/kg, 163,20 g eines Kresolnovolaks mit einem Hydroxylgehalt von 8,0 bis 9,0 mol/kg, erhältlich von der Firma Occidental Chem., Belgien, unter der Handelsbezeichnung Durez® 33009, 21,92 g Mikrogel-lmidazol-Beschleuniger gemäss Beispiel 2.1; 562,08 g Wollastonit mit einer mittleren Korngröße kleiner als 4,5 µm, erhältlich von der Firma Nyco, USA, unter der Handelsbezeichnung Nyad® 1250; 488,00 g eines Quarz/Kaolinit-Gemisches mit einer mittleren Korngröße von 1,8 µm, erhältlich von der Firma Hoffmann & Söhne, Deutschland, unter der Handelsbezeichnung Aktisil® EM; 6,40 g Russ (Elftex 460); 12,80 g OP Wachs 125 U der Firma Hoechst und 9,60 g Calciumstearat werden in einer Kugelmühle vermahlen, anschließend auf einem Kalander (Schwabenthan) bei einer Temperatur von 100 bis 110°C kompoundiert und zu einem Granulat vermahlen.
Zur Bestimmung der Viskosität bzw. Härtezeit unter Prozessbedingungen werden 34 g Granulat in einem Messkneter (Typ Brabender Plasticorder GU 1315/2) bei einer Schaufeldrehzahl von 30 rpm geprüft. Der sogenannte B-Wert (Drehmoment in Nm) dient hierbei als Mass für die Viskosität, der AD-Wert als Mass für die Härtezeit (Zeit von der Einfüllung der Probe bis zur Härtung in sec).
Das Granulat ergibt folgende Werte:

| | 120°C | 160°C |
|---|---|---|
| B-Wert | 3,5 Nm | 0,6 Nm |
| AD-Wert | 876 sec | 127 sec |

Das Verhältnis zwischen den AD-Werten bei 120°C und 160°C ist 6,9 und weist damit eine gute Latenz nach.
Vom Granulat werden auf verchromten Werkzeugen ISO-Stäbe (80 x 10 x 4 mm) innerhalb von 4 min bei 170°C und Tg-Plättchen (60 x 10 x 1mm) innerhalb von 3 min bei 170°C hergestellt.

An den erhaltenen Formkörpern wurden folgende Eigenschaften gemessen:

| | |
|---|---|
| Biegefestigkeit (ISO 178/93) | 95,9 MPa |
| E-Modul (ISO 178/93) | 13087 MPa |
| Schlagzähigkeit (ISO 179-1eU/93) | 5,4 KJ/m2 |
| Glasumwandlungstemperatur (ISO 6721/94) | 214°C |

### Beispiel 3.2 (Vergleichsbeispiel)

Zum Vergleich zu Beispiel 3.1 wird ein Standardsystem hergestellt, dadurch gekennzeichnet das 2-Ethylimidazol als Beschleuniger anstelle des Mikrogel-lmidazol-Beschleunigers in Beispiel 3.1 verwendet wird. Ansonsten weist das Beispiel die gleiche Zusammensetzung wie in Beispiel 3.1 auf. Das analog zu Beispiel 3.1 hergestellte Granulat weisst ein AD-Werteverhältnis von 3,4 auf.

### Beispiel 3.3 (Vergleichsbeispiel: Verwendung eines Anhydridhärters)

541,5 g eines festen Bisphenol A Epoxidharzes mit einem Epoxidgehalt von 1,68 bis 1,75 Äquivalenten/kg, 1088,3 g eines festen Bisphenol A Epoxidharzes mit einem Epoxidgehalt von 1,33 bis 1,40 Äquivalenten/kg, 285,0 g eines Anhydridhärters; 102,0 g Mikrogel-lmidazol-Beschleuniger gemäss Beispiel 1.2, 5378,3 g Quarz mit einer mittleren Korngröße kleiner als 7,0 µm, erhältlich von der Firma Sihelco, unter der Handelsbezeichnung B300, 30,0 g Russ (Elftex 460) und 75,0 g OP Wachs 125 U der Firma Hoechst werden in einer Kugelmühle vermahlen, anschließend auf einem Kneter (Werner und Pfleiderer) bei einer Temperatur von bis 90°C kompoundiert und zu einem Granulat vermahlen.
Zur Bestimmung der Viskosität bzw. Härtezeit unter Prozessbedingungen werden 34 g Granulat in einem Messkneter (Typ Brabender Plasticorder GU 1315/2) bei einer Schaufeldrehzahl von 30 rpm geprüft. Der sogenannte B-Wert dient hierbei als Mass für die Viskosität, der AD-Wert als Mass für die Härtezeit (Zeit von der Einfüllung der Probe bis zur Härtung in sec).
Das Granulat ergibt folgende Werte:

| | 120°C | 160°C |
|---|---|---|
| B-Wert | 1,3 Nm | 0,3 Nm |
| AD-Wert | 638 sec | 116 sec |

Das Verhältnis zwischen den AD-Werten bei 120°C und 160°C ist 5,5 und weist damit eine gute Latenz nach.

### Beispiel 3.4 (Vergleichsbeispiel)

Zum Vergleich zu Beispiel 3.3 wird ein Standardsystem hergestellt, dadurch gekennzeichnet das 2-Ethylimidazol als Beschleuniger anstelle des Mikrogel-lmidazol-Beschleunigers in Beispiel 3.3 verwendet wird. Ansonsten weist das Beispiel die gleiche Zusammensetzung wie in Beispiel 3.3 auf. Das analog zu Beispiel 3.3 hergestellte Granulat weisst ein AD-Werteverhältnis von 4,5 auf.

Eine Übersicht der Zusammensetzungen und der jeweils ermittelten AD-Verhältnisse der Versuche 3.1 bis 3.4 zeigt die nachfolgende Tabelle:

| Versuch | 3.1 | 3.2 | 3.3 | 3.4 |
|---|---|---|---|---|
| Harz | Epoxidkresolnovolak | Epoxidkresolnovolak | DGEBA | DGEBA |
| Härter | Kresolnovolak | Kresolnovolak | Anhydrid | Anhydrid |
| Beschleuniger | Mikrogel | Imidazol | Mikrogel | Imidazol |
| AD-Verhältnis | 6.9 | 3.4 | 5.5 | 4.5 |

Ein latentes Aushärtungsverhalten ist bei hochfunktionellen Systemen (Versuche 3.1 und 3.2, "Novolaksysteme") bestehend aus Epoxidnovolaken und Novolakhärtern grundsätzlich schwieriger einzustellen, als dies bei vergleichsweise weniger funktionellen Systemen (Versuche 3.3 und 3.4, "Anhydridsysteme") der Fall ist. Ursache dafür ist, dass bei hochfunktionellen Systemen eine signifikante Vernetzung bereits bei einem geringem Reaktionsfortschritt eintritt. Bei den Anhydridsystemen werden hingegen zunächst nur lineare Strukturen gebildet. Das dokumentiert sich bei den gemessenen AD-Verhältnissen als Mass für die Latenz dadurch, dass das AD-Verhältnis von 4.5 auf 3.4 sinkt (siehe Versuche 3.4 und 3.2). Die Tabelle zeigt weiterhin, dass bei einem Anhydridsystem ein verbessertes Latenzverhalten erzielt werden kann, indem ein Imidazol durch das erfindungsgemässe Mikrogel ersetzt wird. Das AD-Verhältnis verbessert sich hierbei von 4.5 auf 5.5. Überraschenderweise zeigt nun das erfindungsgemässe Novolak/Mikrogel System (Versuch 3.1) ein deutlich latenteres Verhalten als erwartet. Für den Fachmann, der aus anwendungstechnischen Gründen ein weniger latentes System verwenden möchte, ergeben sich vielfältige Möglichkeiten, dass erfindungsgemässe System durch Hereinnahme von Komponenten, wie sie beispielsweise in den obigen Vergleichsbeispielen verwendet wurden, entsprechend den gewünschten Eigenschaften, herzustellen.

### Anwendungsbeispiele

### 4.1 Herstellung von Bauteilen durch das Spritzgussverfahren am Beispiel von Scheinwerferreflektoren.

Die nach obigen Versuchen 3.1 (erfindungsgemäss) und 3.2 hergestellten Granulate werden im Plastifizierzylinder einer Spritzgussmaschine bei erhöhter Temperatur plastifiziert, wobei die Temperaturen für die Zone 1 und 2 jeweils 75°C und für die Zone 3 90°C betragen. Unter diesen Bedingungen muss bei Verwendung des nach 3.2 hergestellten Systems bei Zyklusunterbrechungen von mehr als 60 Sekunden bereits ein Leerfahren der Plastifiziereinheit der Spritzgussanlage mit anschliessendem Neuanfahren erfolgen. Bei Verwendung des erfindungsgemässen Systems kann auch nach Unterbrüchen von bis zu 5 Minuten ohne Reinigungsschritt weiterproduziert werden.
Bei der Herstellung von Scheinwerferreflektoren im Spritzgussverfahren können Überspritzungen und Entformungsrückstände insbesondere auf der stark strukturierten Reflektorrückwand immer wieder ein gesondertes Ausblasen oder Reinigen der Form erforderlich machen. Diese Schwankungen zwischen den Schüssen können von einem latenten Material, wie in Versuch 3.1 beschrieben, besser toleriert werden, da im Plastifizierzylinder nur ein geringer Reaktionsfortschritt stattfindet. Somit kann ein stabilerer Prozess mit weniger Abfall gefahren werden.

### 4.2 Imprägnierende Formmasse am Beispiel der Imprägnierung von Spulen

### a) Herstellung der Imprägnierunosmasse

464,8 g Wollastonit mit einer mittleren Korngröße kleiner als 2 µm (mesh grade 200, erhältlich von der Firma Nyco, USA, unter der Handelsbezeichnung Nyad® 200) und 2,3 g Silanhaftvermittler Silan Silquest® A-187 30 Minuten lang mit einer Kugelmühle vermahlen. Anschliessend werden die Komponenten
151,4 g eines festen Epoxidkresolnovolakharzes mit einem Epoxidgehalt von 4,3 bis 4,6 mol/kg, 98,5 g eines festen Bisphenol A Epoxidharzes mit einem Epoxidgehalt von 2,15 bis 2,22 mol/kg, 109,1 g eines Kresolnovolaks mit einem Hydroxylgehalt von 8,0 bis 9,0 mol/kg, erhältlich von der Firma Occidental Chem., Belgien, unter der Handelsbezeichnung Durez® 33009, 6,7 g Mikrogel-lmidazol-Beschleuniger gemäss Beispiel 2.1, 0,2 g Russ (Elftex 460) und 17,0 g OP® Wachs 125 U der Firma Hoechst hinzugegeben und 3 Stunden lang in der Kugelmühle vermahlen.

### Schliesslich werden

150 g gemahlene Glasfasern (mittlere Länge = 225 µm, mittlerer Durchmesser = 15 - 16 µm, erhältlich unter der Handelsbezeichnung Milled Glas® von der Firma Owens Corning, und die Gesamtzusammensetzung nochmals 30 Minuten lang vermahlen. Die so erhaltenen Pulver werden anschliessend auf einem Kalander (Schwabenthan) bei einer Temperatur von 80 °C kompoundiert und zu einem Granulat verarbeitet.

### b) Imprägnierung, Bestimmung der Imprägnierungstiefe, Beurteilung der Imprägniergüte

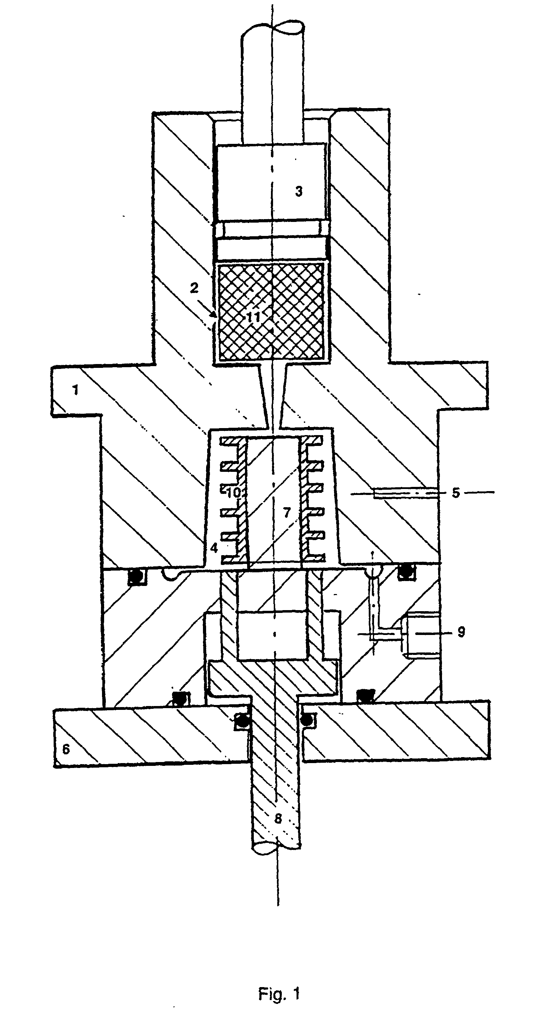

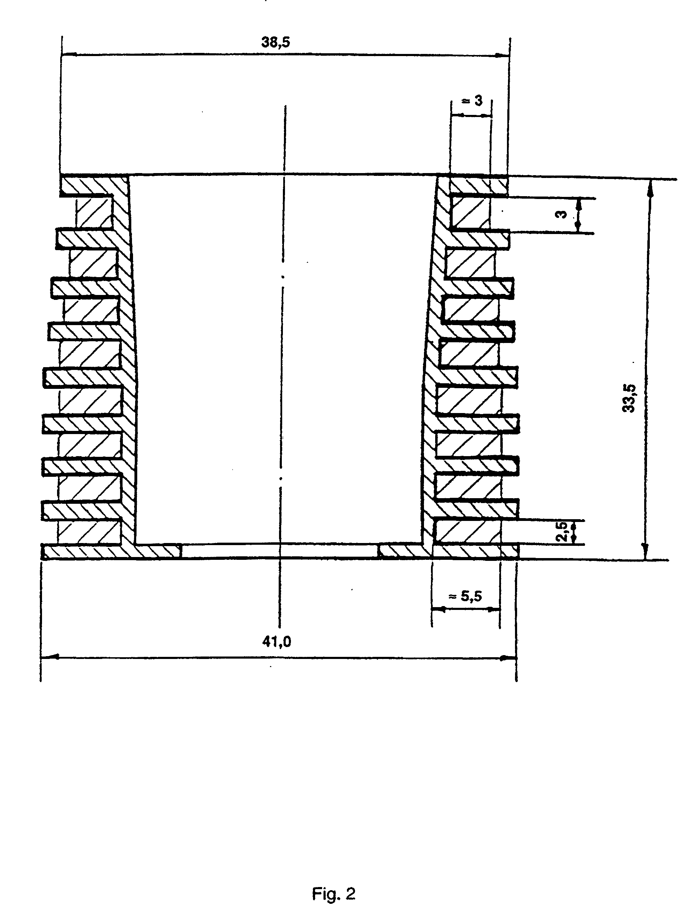

Fig. 1 zeigt eine schematische Darstellung des Presswerkzeugs, mit dem die Testspulen in den nachfolgenden Beispielen imprägniert werden. Fig. 2 zeigt einen Längsschnitt durch den in den Beispielen verwendete Spulenkörper und dessen Abmessungen.

Die Imprägnierung der Testspule erfolgt in allen Beispielen nach dem Prinzip der Spritzpressung (Transferpressen), wobei die in Fig. 1 schematisch dargestellte Testapparatur zur Anwendung kommt. Diese enthält zwei voneinander trennbare Teile (1) und (6). Das erste Teil (1) weist einen Spritzraum (2) zur Aufnahme einer Tablette (11), bestehend aus der erfindungsgemässen Imprägnierzusammensetzung, den Transferkolben (3), die Kavität (4) und eine Bohrung (5) zur Aufnahme eines Temperaturfühler auf. Das zweite Teil (6) enthält einen Kern (7) zur Halterung der zu imprägnierenden Spule (10), eine Vorrichtung (8) zum Entfernen der fertig imprägnierten Spule vom Kern (7) sowie einen Anschluss (9) zur Evakuierung der Kavität (4). Eine auf ca. 110°C vorgewärmte Spule (10) mit den in Fig. 2 angegebenen Abmessungen, die in allen Kammern eine Wicklung aus Kupferdraht eines Durchmessers von 94 mm mit einer Wicklungsdichte von ca. 100 Windungen pro mm2 aufweist, wobei die Wicklungsdicke von der obersten Kammer zur untersten Kammer von ca. 3,5 auf ca. 5,5 mm ansteigt, wird in die Kavität (4) des auf 180°C aufgeheizten Imprägnierwerkzeugs (1,6) eingebracht. Die granulatförmige Imprägnierzusammensetzung wird kalt zu einer Tablette verpresst und anschliessend mit Hilfe eines Hochfrequenzvorwärmgerätes auf ca. 70°C erwärmt. Die so vorgewärmte Tablette (11) wird in den Spritzraum (2) eingebracht und es wird ein Vakuum von ca. 30 mbar an der Kavität angelegt. Danach wird die Imprägniermasse mit Hilfe des Kolbens (3) während eines Zeitraums von ca. 15 s in die Kavität (4) transferiert (Spritzdruck zwischen 80 und 150 bar). Die anschliessende Härtungszeit beträgt 5 min. Danach wird die umhüllte und imprägnierte Spule entformt. Die entnommene Spule wird in Längsrichtung zersägt und poliert. Mit Hilfe eines Mikroskops wird die jeweils erreichte Imprägniertiefe vermessen und die Imprägniergüte optisch beurteilt. Die Imprägnierung gilt hierbei als "gut", wenn mehr als 95 Prozent des Raumes zwischen den Drahtwindungen einer Wicklung mit der Imprägniermasse gefüllt sind.

Gemäss der beschriebenen Vorschrift wird 500 Gramm einer Imprägnierungsmasse obiger Zusammensetzung hergestellt und untersucht. Die Imprägnierungsmasse zeigt die folgenden Eigenschaften:

| Eigenschaft | |
|---|---|
| lmprägnierungstiefe [mm] | 4,0 |
| Imprägnierungsgüte | gut |
| Shore-D Härteaufbau bis 70 | 3 min |

Mit der erfindungsgemässen Formulierung kann demnach eine ausgedehnte Imprägniertiefe von 4 mm unter Erhalt einer guten Imprägniergüte erreicht werden. Eine für das Entformen der Spule notwendige Shore D - Härte von 70 wird bereits nach 3 min erreicht. Eine Senkung von Produktionskosten kann durch derart schnell härtende Formmassen erreicht werden.

### 4.3 Mehrstufiger Aufbau einer Stabzündspule

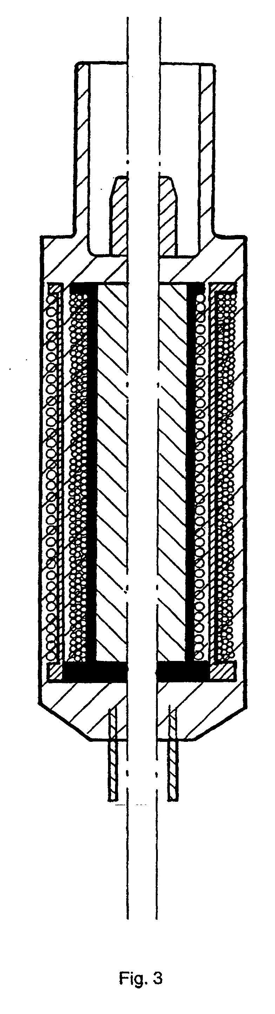

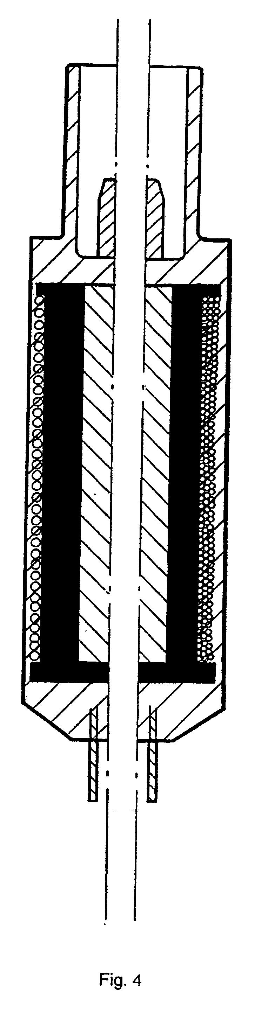

Die Industrie verlangt zunehmend kleinere Durchmesser bei der Herstellung von Stabzündspulen. Damit wird das Umhüllen und Imprägnieren insbesondere der inneren Spule in einem sogenannten "One-Shot"-Verfahren immer schwieriger. Dies gilt insbesondere, da die Vermeidung von Lufteinschlüssen und eine gleichmässige Verteilung der Formmasse zwingende Bedingung sind.
Durch die in Abschnitt 4.2 beschriebenen guten Imprägniereigenschaften der erfindungsgemässen Formmassen ist es möglich, Stabzündspulen mehrstufig aufzubauen. Zunächst kann der Metallkern einer Spule mit der Formmasse so umhüllt werden, dass die Aussenkontur einen Spulenkörper für die innenliegende Wicklung einer Stabzündspule bildet (siehe Fig. 3; Formmasse entspricht der schwarzen Zone).
Nach Aufbringen der Drahtwicklung kann diese in einem zweiten Schritt imprägnierend umhüllt werden. Bei dem inneren Spülenkörper kann es sich sowohl um die primäre als auch um die sekundäre Wicklung handeln, wie es in der unteren bzw. oberen Hälfte der Zeichnung angedeutet ist. Die äussere Kontur des Formkörpers bildet den Spulenkörper für die zweite, entsprechend komplementäre Wicklung. (siehe Fig. 4; Formmasse entspricht der schwarzen Zone)

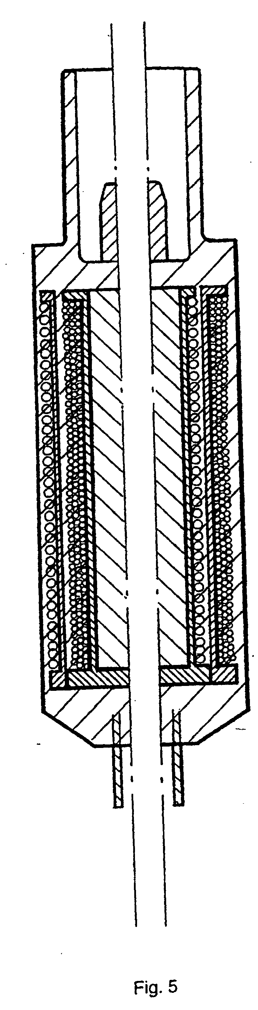

In einem dritten Schritt kann nun auch die äussere Wicklung imprägniert und umhüllt werden. Die äussere Form ist identisch mit der Aussenkontur der Stabzündspule, vorausgesetzt, dass nicht weitere Aufbauten z.B. zur elektrischen Abschirmung vorgesehen sind (siehe Fig. 5; Formmasse entspricht der schraffierten Zone).
Die Industrie verlangt zunehmend kleinere Durchmesser bei der Herstellung von Stabspulen. Damit wird das Umhüllen und Imprägnieren insbesondere der inneren Spule in einem sogenannten "One-Shot"-Verfahren immer schwieriger. Dies gilt insbesondere, da die Vermeidung von Lufteinschlüssen und eine gleichmässige Verteilung der Formmasse zwingende Bedingung sind.
Ein mehrstufiges Verfahren hat nun zum einen den Vorteil, dass sich sehr kleine Abstände zwischen innerer und äusserer Spule bei hoher Designfreiheit zum Beispiel beim Drahtdurchmesser oder bei der Art und Lage der Wicklungen realisieren lassen.
Zum anderen können die heute üblichen thermoplastischen Spulenkörper durch die erfindungsgemässe Formmasse ersetzt werden, was eine Reduzierung der dielektrischen Übergänge und damit potentieller Teilentladungen bewirkt.

## Patentansprüche

1. Zusammensetzung enthaltend
(a) ein Epoxidharz mit durchschnittlich mehr als einer 1,2-Epoxidgruppe pro Molekül,
(b) ein Polyol als Epoxidharzhärtungsmittel und
(c) ein festes Reaktionsprodukt aus einem Carbonsäuregruppen enthaltenden Mikrogel und einer stickstoffhaltigen Base (Mikrogel-Amin-Addukt) als Beschleuniger.

2. Zusammensetzung nach Anspruch 1, enthaltend als Epoxidharz (a) ein aromatisches Epoxidharz.

3. Zusammensetzung nach Anspruch 1, enthaltend als Epoxidharz (a) einen Bisphenoldiglycidylether oder einen Epoxynovolak.

4. Zusammensetzung nach Anspruch 1, enthaltend als Epoxidharz (a) einen Epoxyphenoloder einen Epoxykresolnovolak.

5. Zusammensetzung nach Anspruch 1, enthaltend als Epoxidharzhärtungsmittel (b) einen Kresolnovolak.

6. Zusammensetzung nach Anspruch 1, enthaltend als festes Mikrogel-Amin-Addukt (c) ein Copolymer aus mindestens einer ungesättigten Carbonsäure und mindestens einem mehrfunktionellen Vemetzer.

7. Zusammensetzung nach Anspruch 1, enthaltend als zusätzliche Komponente (d) einen Füllstoff.

8. Zusammensetzung nach Anspruch 1, enthaltend als zusätzliche Komponente (d) 1 bis 80 Gew.-% Füllstoff, bezogen auf die Gesamtzusammensetzung bestehend aus den Komponenten (a), (b), (c) und (d).

9. Zusammensetzung nach Anspruch 1, enthaltend als Komponente (d) 1 bis 80 Gew.-% Wollastonit, bezogen auf die Gesamtzusammensetzung bestehend aus den Komponenten (a), (b), (c) und (d), mit einer mittleren Teilchengrösse kleiner als 50 µm.

10. Zusammensetzung nach Anspruch 1, enthaltend als zusätzliche Komponente (d) 25 bis 40 Gew.-% Wollastonit, bezogen auf die Gesamtzusammensetzung bestehend aus den Komponenten (a), (b), (c) und (d), mit einer mittleren Teilchengrösse kleiner als 5 µm.

11. Zusammensetzung nach Anspruch 1, enthaltend als zusätzliche Komponente (d) 1 bis 80 Gew.-% Quarz/Kaolinit-Gemisch bezogen auf die Gesamtzusammensetzung bestehend aus den Komponenten (a), (b), (c) und (d), mit einer mittleren Teilchengrösse kleiner als 50 µm und einem Gewichtsverhältnis Quarz zu Kaolinit von 5 zu 95 bis 95 zu 5.

12. Zusammensetzung nach Anspruch 1, enthaltend als zusätzliche Komponente (d) 25 bis 40 Gew.-% Quarz/Kaolinit-Gemisch mit einer mittleren Teilchengrösse kleiner als 5 µm und einem Gewichtsverhältnis Quarz zu Kaolinit von 20 zu 80 bis 80 zu 20.

13. Vemetzte Produkte, dadurch erhältlich, dass eine Zusammensetzung gemäss einem der Ansprüche 1 bis 12 gehärtet wird.

## Claims

1. A composition comprising
(a) an epoxy resin having, on average, more than one 1,2-epoxy group per molecule,
(b) a polyol as epoxy resin curing agent and
(c) a solid reaction product of a carboxylic-acid-group-containing microgel and a nitrogen-containing base (microgel-amine adduct) as accelerator.

2. A composition according to claim 1, comprising, as epoxy resin (a), an aromatic epoxy resin.

3. A composition according to claim 1, comprising, as epoxy resin (a), a bisphenol diglycidyl ether or an epoxy novolak.

4. A composition according to claim 1, comprising, as epoxy resin (a), an epoxy phenol novolak or an epoxy cresol novolak.

5. A composition according to claim 1, comprising, as epoxy resin curing agent (b), a cresol novolak.

6. A composition according to claim 1, comprising, as solid microgel-amine adduct (c), a copolymer of at least one unsaturated carboxylic acid and at least one polyfunctional crosslinking agent.

7. A composition according to claim 1, comprising, as additional component (d), a filler.

8. A composition according to claim 1, comprising, as additional component (d), from 1 to 80 % by weight filler, based on the total composition consisting of components (a), (b), (c) and (d).

9. A composition according to claim 1, comprising, as component (d), from 1 to 80 % by weight wollastonite, based on the total composition consisting of components (a), (b), (c) and (d), having an average particle size of less than 50 µm.

10. A composition according to claim 1, comprising, as additional component (d), from 25 to 40 % by weight wollastonite, based on the total composition consisting of components (a), (b), (c) and (d), having an average particle size of less than 5 µm.

11. A composition according to claim 1, comprising, as additional component (d), from 1 to 80 % by weight quartz/kaolinite mixture, based on the total composition consisting of components (a), (b), (c) and (d), having an average particle size of less than 50 µm and a ratio by weight of quartz to kaolinite of from 5 : 95 to 95 : 5.

12. A composition according to claim 1, comprising, as additional component (d), from 25 to 40 % by weight quartz/kaolinite mixture having an average particle size of less than 5 µm and a ratio by weight of quartz to kaolinite of from 20 : 80 to 80 : 20.

13. A crosslinked product obtainable by curing a composition according to any one of claims 1 to 12.

## Revendications

1. Composition contenant
(a) un résine époxyde ayant en moyenne plus de un groupe 1,2-époxyde par molécule,
(b) un polyol en tant que durcisseur de résines époxydes et
(c) un produit réactionnel solide à partir d'un microgel présentant des groupes acide carboxylique et d'une base azotée (adduit microgel-amine) en tant qu'accélérateur.

2. Composition selon la revendication 1, contenant, en tant que résine époxyde (a), une résine époxyde aromatique.

3. Composition selon la revendication 1, contenant, en tant que résine époxyde (a), un éther diglycidylique du bisphénol ou une résine époxy-novolaque.

4. Composition selon la revendication 1, contenant, en tant que résine époxyde (a), une résine époxyphénol-novolaque ou une résine époxycrésol-novolaque.

5. Composition selon la revendication 1, contenant, en tant que durcisseur de résines époxydes, (b) une résine crésol-novolaque.

6. Composition selon la revendication 1, contenant, en tant qu'adduit microgel-amine solide (c), un copolymère à partir d'au moins un acide carboxylique insaturé et d'au moins un réticulant multifonctionnel.

7. Composition selon la revendication 1, contenant, en tant que composant supplémentaire (d) une charge.

8. Composition selon la revendication 1, contenant, en tant que composant supplémentaire (d), de 1 à 80 % en poids de charge, par rapport à la totalité de la composition constituée par les constituants (a), (b), (c) et (d).

9. Composition selon la revendication 1, contenant, en tant que composant (d), de 1 à 80 % en poids de wollastonite, par rapport à la totalité de la composition constituée par les constituants (a), (b), (c) et (d), ayant une taille de particules moyenne inférieure à 50 µm.

10. Composition selon la revendication 1, contenant, en tant que composant supplémentaire (d), de 25 à 40 % en poids de wollastonite, par rapport à la totalité de la composition constituée par des constituants (a), (b), (c) et (d), ayant une taille de particules moyenne inférieure à 5 µm.

11. Composition selon la revendication 1, contenant, en tant que composant supplémentaire (d), de 1 à 80 % en poids de mélange de quartz/kaolinite, par rapport à la totalité de la composition, ayant une taille de particules moyenne inférieure à 50 µm et un rapport pondéral du quartz au kaolinite de 5 à 95 à 95 à 5.

12. Composition selon la revendication 1, contenant, en tant que composant supplémentaire (d), de 25 à 40 % en poids de mélange de quartz/kaolinite, ayant une taille de particules moyenne inférieure à 5 µm et un rapport pondéral du quartz au kaolinite de 20 à 80 à 80 à 20.

13. Produits réticulés que l'on peut obtenir par durcissement d'une composition selon une ou plusieurs des revendications 1 à 12.
